# EUROPÄISCHE PATENTSCHRIFT

(11) **EP 1 391 086 B1**
(45) Veröffentlichungstag und Bekanntmachung des Hinweises auf die Patenterteilung: **14.12.2005**
(21) Anmeldenummer: 02727226.9
(22) Anmeldetag: 14.03.2002
(51) Int. Cl.: H04L 12/407

(54) **VERFAHREN UND VORRICHTUNG ZUR ERSTELLUNG EINES ZEITPLANS DER ÜBERMITTLUNG VON NACHRICHTEN AUF EINEM BUSSYSTEM**
METHOD AND DEVICE FOR PREPARING A TIME SCHEDULE FOR THE TRANSMISSION OF MESSAGES TO A BUS SYSTEM
PROCEDE ET DISPOSITIF POUR ETABLIR UN ECHEANCIER DE LA TRANSMISSION DE MESSAGES SUR UN SYSTEME DE BUS

(30) Priorität: 15.03.2001 DE 10112906
(43) Veröffentlichungstag der Anmeldung: 25.02.2004
(73) Patentinhaber: ROBERT BOSCH GMBH, 70422 Stuttgart (DE)
(72) Erfinder: FUEHRER, Thomas, 70839 Gerlingen (DE); MUELLER, Bernd, 71229 Leonberg (DE)
(86) Internationale Anmeldenummer: PCT/DE2002/000917
(87) Internationale Veröffentlichungsnummer: WO 2002/076032

(56) Entgegenhaltungen:
- DE-A- 10 000 302
- DE-A- 10 000 303
- DE-A- 10 000 304
- DE-A- 10 000 305
- COUTINHO F ET AL: "Jitter minimization with genetic algorithms" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6. September 2000 (2000-09-06), Seiten 267-273, XP010521819 ISBN: 0-7803-6500-3

## Beschreibung

### Stand der Technik

Die Erfindung betrifft ein Verfahren und eine Vorrichtung sowie ein Computerprogramm und ein Computerprogrammprodukt zur Erstellung eines Zeitplans der Übermittlung von Nachrichten auf einem Bussystem gemäß den Oberbegriffen der Ansprüche.

Die Vernetzung von Steuergeräten, Sensoren und Aktorik mit Hilfe eines Kommunikationssystems oder Bussystems hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Steuergeräte können dabei erzielt werden. Man spricht von verteilten Systemen. Die Kommunikation zwischen verschiedenen Stationen findet mehr und mehr über einen Bus oder ein Bussystem statt. Der Kommunikationsverkehr auf dem Bus, Zugriffs- und Empfangsmechanismen sowie Fehlerbehandlung werden über ein Protokoll geregelt.

Als Protokoll im Kfz-Bereich etabliert ist der CAN. Dieser ist ein ereignisgesteuertes Protokoll, d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem wird über eine prioritätsbasierte Bitarbitrierung gelöst. Eine Voraussetzung dafür ist, dass jeder Nachricht eine eindeutige Priorität zugewiesen ist. Dies erfolgt in der Regel beim CAN-Protokoll durch eine Kennung, die am Anfang jeder Nachricht enthalten ist und den Nachrichteninhalt eindeutig identifiziert. Diese Kennung oder Identifikation ID (message identifier) ist je nach CAN-Version unterschiedlich lang (z.B. 11 Bit bei Basic CAN). Das CAN-Protokoll ist sehr flexibel, ein Hinzufügen weiterer Knoten und Nachrichten ist problemlos möglich, solange es noch freie Prioritäten (speziell message identifier) gibt. Die Sammlung aller im Netzwerk zu sendenden Nachrichten mit Prioritäten werden in einer Liste, der sogenannten Kommunikationsmatrix, abgelegt. Die Erstellung der Kommunikationsmatrix ist in den meisten Fällen somit nur die Sammlung aller Nachrichten im System. Die Reihenfolge bzw. Abfolge der Nachrichten basiert vielfach auf dem langjährigen Know-How der Applikationsingenieure und Systemdesigner. Es existieren aber auch Tools, die diese Erstellung der Kommunikationsmatrizen unterstützen.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer (globalen) Zeit ausgelöst. Der Zugang zum Medium basiert auf der Zuteilung von Zeitbereichen, in denen ein Sender exklusives Senderecht hat. Das Protokoll ist vergleichsweise unflexibel, ein Hinzufügen von neuen Knoten ist nur dann möglich, wenn zuvor schon die entsprechenden Zeitbereiche freigelassen wurden. Dieser Umstand zwingt den Systemdesigner bzw. Applikationsingenieur, die Nachrichtenreihenfolge schon vor Inbetriebnahme festzusetzen. Es wird also ein Fahrplan oder Bus-Schedule erstellt, der den Anforderungen der Nachrichten bezüglich Wiederholrate, Redundanz, Deadlines usw. genügen muss. Dieser sogenannte Bus-Schedule ist somit ein Fahrplan oder Zeitplan oder Ablaufplan oder Kommunikationsplan bezüglich der Nachrichtenübermittlung auf dem Bus. Die Positionierung der Nachrichten innerhalb der Sendeperioden muss auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latenz-Jitter beim Senden der Nachricht am Bus) zerstört. Damit werden hohe Anforderungen an die Planungstools gestellt.

Der in den Patentanmeldungen DE 100 00 302 A1, DE 100 00 303 A1, DE 100 00 304 A1, DE 100 00 305 A1 gezeigte Lösungsansazt, auch dargestellt im ISO-Draft 11898-4, des zeitgesteuerten oder time-triggered CAN, genügt den oben skizzierten Forderungen nach zeitgesteuerter Kommunikation sowie den Forderungen nach einem gewissen Maß an Flexibilität. Dieser sogenannte TTCAN (time triggered controller area network) erfüllt dies durch den Aufbau der Kommunikationsrunde (basic cycle) in sogenannte exklusive Zeitfenster für periodische Nachrichten bestimmer Kommunikationsteilnehmer und in sogenannte arbitrierende Zeitfenster für spontane Nachrichten mehrerer Kommunikationsteilnehmer. Bei der Planung eines TTCAN-Netzwerks oder TTCAN-Bussystems werden aber, wie oben beschrieben die zeitgesteuerten Nachrichten das Gerüst für die Erstellung des Busscheduls vorgeben. Die Anforderungen der zeitgesteuerten Kommunikation müssen auch in einer TTCAN-Kommunikationsmatrix bzw. Bus-Schedule bzw. Zeitplan für die Übermittlung der Nachrichten optimal unterstützt bzw. garantiert werden. Erst in zweiter Instanz können die ereignisgesteuerten Nachrichten bzw. arbitrierenden Zeitfenster berücksichtigt werden. Die entsprechenden Planungstools müssen sozusagen beide Welten der Kommunikationsplanung unterstützen.

Für die zeitgesteuerte Kommunikation und die Auflösung der Kommunikationsbeziehungen (Applikation zum Sendezeitpunkt der Nachricht am Bus) in Form einer Kommunikationsmatrix unter Einbeziehung der Nachrichtenlatenzen, Nachrichtenperioden und Deadlines werden hohe Anforderungen an die Planungstools gestellt. Aktuell verfügbare kommerzielle Tools, insbesondere CAN-basierte Tools, unterstützen diese Anforderungen wie z. B. TTCANspezifisiche Planung überhaupt noch nicht. Erste Lösungsansätze für strikt zeitgesteuerte Kommunikationsprotokolle wie z. B. TTP/C zeigen, dass die einzusetzenden Algorithmen schnell als NP-vollständiges Problem münden. Das Auffinden des globalen Maximums, also der besten Lösung für das gesamte Kommunikationsnetzwerk bezüglich des Busscheduls kann nicht garantiert werden. Es werden möglicherweise nur suboptimale Lösungsmengen für einen Bus-Schedule mit herkömmlichen Suchalgorithmen gefunden.

Daneben sind im Stand der Technik genetische Algorithmen bekannt. Projekte wie beispielsweise VLSI, Circuit-Layout-Generierung über genetische Algorithmen oder Lösung nichtlinearer Gleichungen über genetische Altorithmen (for fitting potential surfaces) wenden diese Technik an. Ein Zitat aus D. Goldberg "Genetic Algorithms in Search, Optimization & Machine Learing" vom Verlag Addison-Wesley Publishing Company Inc. von Januar 1989 zeigt die grundsätzliche Idee der genetischen Algorithmen: "Genetic algorithms are search algorithms based on the mechanics of natural selection and natural genetics. They combine survival of the fittest among string structures with a structured yet randomized information exchange to form a search algorithm with some of the innovative flair of human search. In every generation, a new set of artificial creatures (strings) is created using bits and pieces of the fittest of the old; an occasional new part is tried for good measure. While randomized, genetic algorithms are no simple random walk. They efficiently exploit historical information to speculate on new search points with expected improved performance."

Dieser Ansatz zur alternativen Suche von Lösungen in immens großen Lösungsräumen hatte zum Ziel, die adaptiven Prozesse der natürlichen Systeme zu abstrahieren und zu erklären. D.h. die genetischen Algorithmen basieren prinzipiell auf der natürlichen Auslese oder genetischen Selektion. Dabei werden Überlebensprinzipien, wie das Überleben der Stärksten mit Populations- oder Lösungsstrukturen und dabei entstehendem Informationsaustausch kombiniert. In jeder Generation werden also neue Populationen oder Lösungen kreiert, die Teile der Besten der alten Generationen verwenden. Denn im Gegensatz zu genetischen Algorithmen liefern viele Funktionen F eine breite Streuung und diskontinuierliche Ergebnisse und sind daher für viele traditionelle Ansätze der Suche nach Lösungen F(x) ungeeignet. Genetische Algorithmen umgehen dieses Problem durch Nachbildung der natürlichen Evolution nach dem Darwinschen Modell.

Dazu zeigt die Offenbarung von Coutinho et al "Jitter minimization with genetic algorithms" IEEE international Workshop on Porto von 6. - 8. September 2000 (Seiten 267-273, XP010521819, ISBN 0-7803-6500-3) die Minimierung von Jitter bei Feldbussystemen und insbesondere bei zeitgesteuerten Bussystemen. Dzu wird als Genotyp des genetischen Algorithmus ein Vektor von Integergrößen verwendet, welche jeweils die Jitter oder Offsets einzelner Nachrichten im Bussystem repräsentieren. D. h. als Lösungsansatz des Suchproblems ergibt sich ein minimierter Jitter für das Bussystem. Dabei werden die Jitter der Nachrichten unterschieden, nicht aber die Nachrichten selbst. Dies schränkt die Flexibilität bezüglich anderer Bewertungskriterien ein, die in diesem Stand der Technik aber auch nicht vorgesehen sind.

Es ist somit Aufgabe der Erfindung, für zeitgesteuerte Bussysteme die angeklungenen Probleme bezüglich der Planung des Zeitplanes oder Fahrplanes des Busses, also des Bus-Schedules zu überwinden und gleichzeitig eine hohe Flexibilität bezüglich des Einsatzes des genetischen Algorithmus zu erzielen.

### Vorteile der Erfindung

Die vorliegende Erfindung kombiniert somit die Vorteile der genetischen Algorithmen speziell für Suchaufgaben über einen großen Lösungsraum mit den Anforderungen des zeitgesteuerten Kommunikationssystems TTCAN, einen optimalen Busfahrplan, also Bus-Schedule oder Zeitplan für zeitgesteuerte, periodische Nachrichten und ereignisgesteuerte, spontane Nachrichten gemäß TTCAN, vor Inbetriebnahme zu finden.

Die Erfindung zeigt somit vorteilhafter Weise ein Verfahren und eine Vorrichtung sowie ein Computerprogramm und ein Computerprogrammprodukt zur Erstellung eines Zeitplans der Übermittlung von Nachrichten auf einem Bussystem (Bus-Schedule), wobei der Zeitplan durch die Verwendung eines genetischen Algorithmus erstellt wird. Zweckmäßiger Weise werden die Nachrichten in periodische und spontane Nachrichten unterteilt, wobei die Nachrichten mit einer Kennung versehen sind oder versehen werden, um diese in einer für genetische Algorithmen geeigneten Codierung vorliegen zu haben.

Zweckmäßiger Weise handelt es sich bei dem Bussystem um ein TTCAN-Bussystem, wobei für die Nachrichten Zeitfenster vorgesehen sind und als Zeitplan entweder die Reihenfolge der Zeitfenster und/oder der Nachrichten dargestellt wird.

Vorteilhafter Weise wird aus der Vielzahl der potentiellen Zeitpläne als Lösung für ein Bus-Schedule wenigstens ein möglicher Zeitplan ermittelt, der einer starken, insbesondere besten Lösung entspricht. Dabei werden die Zeitpläne als Lösung für den Bus-Schedule mit wenigstens einem ersten vorgebbaren Bewertungskriterium bewertet, anhand dessen eine Optimierung der Zeitpläne bzw. eine Auswahl der Zeitpläne ermöglicht wird.

Ein zweckmäßiges erstes Bewertungskriterium ist der Vergleich der Summe der Latenzzeiten des wenigstens einen Zeitplans mit einem vorgegebenen Wert oder der Summe der Latentzeiten wenigstens eines weiteren Zeitplans.

Ein weiteres Bewertungskriterium gleichzeitig oder alternativ ist der Vergleich der Summe der Deadlines, also der notwendigen Übermittlungszeitpunkte oder der notwendigen Übermittlungszeiten der Nachrichten, bezogen auf die Zeitpläne. Vorteilhafter Weise wird im Weiteren der wenigstens eine mögliche Zeitplan, der ausgewählt wird, abhängig von den Bewertungskriterien mit wenigstens einem zweiten Zeitplan, insbesondere ebenfalls einem ausgewählten Zeitplan, gekreuzt. Zweckmäßiger Weise erfolgt das Kreuzen der Zeitpläne durch Austauschen wenigstens einer Nachricht beider Zeitpläne oder, besonders vorteilhaft, durch Austauschen wenigstens eines Bits der Zeitpläne, sofern diese in binärer Form dargestellt werden, insbesondere mittels einer Kennung oder eines Identifiers, wodurch ein eindeutiges Bitmuster der Nachricht(en) oder der Zeitfenster enthalten ist.

Weiterhin von Vorteil ist, neben der Kreuzung eine Mutation vorzusehen, so dass wenigstens ein Bit wenigstens eines Zeitplans verändert, also insbesondere gekippt wird, so dass neben den gefundenen guten Lösungen weitere potentielle Lösungen entstehen.

Vorteilhafter Weise kann der genannte Algorithmus bzw. das entsprechende Verfahren als Computerprogramm realisiert werden, so dass bei Ablauf des selben auf einem Computer oder der erfindungsgemäßen Vorrichtung (welche andererseits aber auch vollständig in Hardware realisiert sein kann) das erfindungsgemäße Verfahren ausgeführt wird. Zweckmäßiger Weise kann dieses Computerprogramm auch auf einem Datenträger als Computerprogrammprodukt vorliegen, wobei der Datenträger in jeder üblichen Form vorliegen kann.

Die Vorteile der Erfindung entsprechen somit insbesondere den Vorteilen der genetischen Algorithmen bei der Suche nach einer möglichst global gültigen Lösung in unüberschaubaren Lösungsräumen. Ein TTCAN-Bus-Schedule ist erfindungsgemäß ein solcher Lösungsraum. Durch die Mechanismen der Evolution, also Überleben des Stärksten, wird gewährleistet, dass man sich recht rasch auf eine optimale Lösung zubewegt. Der Mechanismus der Kreuzung vervielfältigt sozusagen besonders aussichtsreiche Familien. Der Mechanismus der Mutation gewährleistet, dass man per Zufall und/oder willkürlichem Eingriff aus der Evolutionsrichtung der besten Lösung geworfen wird und eventuell einen weiteren, optimalen Lösungsansatz findet. Dieser Lösungsansatz wäre aber eventuell durch konventionelle Suchalgorithmen erst nach unakzeptabel langer Zeit gefunden worden. Möglicherweise ist dieser neue Pfad vielversprechend, so dass er im nächsten Schritt des genetischen Algorithmus weiterverfolgt wird, oder er fällt über die erste Bewertungsfunktion wieder heraus. Wird ein neuer Lösungsweg eingeschlagen so wird aufgrund der vorab gewählten Codierung und durch den Mechanismus der Kreuzung die bereits vorhandene Information weitergegeben und nicht verworfen (Historie).

Weitere Vorteile und vorteilhafte Ausgestaltungen ergeben sich aus der Beschreibung sowie den Merkmalen der Ansprüche.

Zeichnung

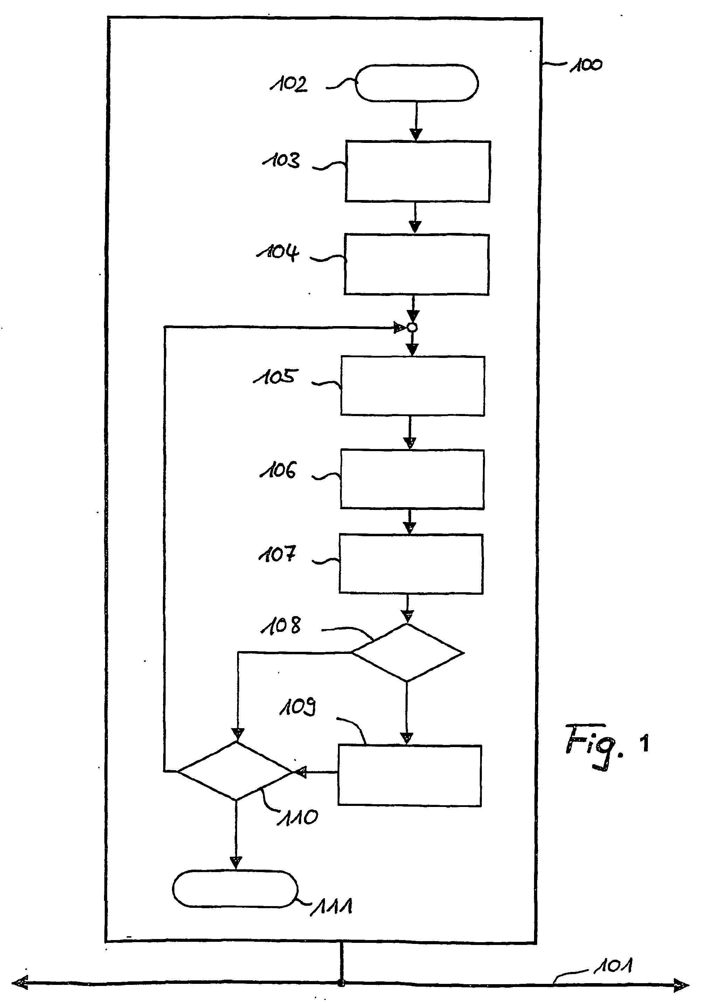

Die Erfindung wird im Weiteren anhand der mit einer Figur dargestellten Zeichnung näher erläutert. Dabei zeigt die Figur eine Vorrichtung, in welcher symbolisch dargestellt das erfindungsgemäße Verfahren abläuft.

### Beschreibung der Ausführungsbeispiele

Die prinzipielle Funktionsweise der genetischen Algorithmen wird in den nachfolgenden Schritten dargestellt:
- Codierung der Parameter bzw. des Parametersets in geeigneter Form, also hier der Nachrichten für das Bus-Schedule. Als geeignete Form kann insbesondere ein Bitmuster zur Codierung verwendet werden, z. B. speziell der Identifier aus dem controller area network CAN oder aus dem TTCAN. Die Darstellung der periodischen und der spontanen Nachrichten eines TTCAN-Netzwerks in einer für genetische Algorithmen geeigneten Codierung ist beispielsweise auch die Codierung des Parametersets, z. B. als Bitvektor von n x m Bits, wobei m Bits die Nachrichten-ID, also den Nachrichten-Identifier oder Kennung codieren und n Nachrichten im TTCAN-Netzwerk vorhanden sind.
- Die Idee der Erfindung umfasst ferner eine erste Bewertung der Anfangspopulation, wobei die stärksten Lösungen herausgefunden werden sollen und diese als Messlatte für zukünftige Populationen erkannt werden müssen. Dazu muss wenigstens eine Bewertungsfunktion bzw. Bewertungskriterium erstellt werden, um zu einer Filterung der besten Lösungen einer Population, also der aussichtsreichsten Zeitpläne bzw. Bus-Schedules entsprechend der Bewertungskriterien zu gelangen. Beispielhafte Bewertungskriterien oder Bewertungsfunktionen sind z. B. die Bewertung nach der minimalen Summe aller Latenzzeiten oder der minimalsten Summe für Deadlines nach dem Ansatz "earliest deadline first".
- Anschließend werden insbeosndere zufällig ausgewählte Instanzen der stärksten aus der ersten Population untereinander gekreuzt, wodurch eine neue Population entsteht, z. B. gemeinsam mit einigen ungekreuzten. Für die technische Anwendung zur Erstellung des Bus-Schedules bedeutet das die Bereitstellung von Kreuzungsfunktionen, also wenigstens einem Kreuzungskriterium. Am Beispiel des Bitmusters oder Bitvektors kann dies z. B. die Kreuzung von zufällig ausgewählten Lösungen an einer bestimmten Stelle k aus k e [1 .. n X m] wobei k ebenfalls mittels Zufallsgenerator bestimmt werden kann bei m Bits zur Nachrichtencodierung und n Nachrichten im TTCAN-Netzwerk.
- Optional können zusätzlich wiederum nach bestimmten zweiten Bewertungskriterien bei einigen Instanzen/Lösungen oder allen Instanzen/Lösungen sogenannte Mutationen durchgeführt werden, so dass Mutationen aus der aktuellen Population entstehen und sich eventuell grundlegend von anderen unterscheiden. Im Rahmen der technischen Anwendung bedeutet dies wiederum, dass beispielsweise im Rahmen der TTCAN-binären Darstellung z. B. ein Zufallsgenerator vorgesehen ist, der 1 Bit aus den n x m Bits des Nachrichtenbitvektors, insbesondere mit CAN oder TTCAN-Identifier kippt. Diese Mutationen können nach einer bestimmten Zahl Verfahrensabläufen, z. B. nach dem 5. oder 10. Mal oder auch zufällig per Zufallsfunktion erfolgen.

Damit werden nach jedem Durchlauf die stärksten oder eben besten Lösungen bezüglich der Bewertungskriterien ausgewählt, wobei erneut einige der ausgewählten besten Lösungen gekreuzt werden können und die optionalen Mutationen weitere Lösungsvorschläge freigeben.

Somit ist der Kern der Erfindung die Lösung des Suchproblems eines optimalen Busschedules für den TTCAN mit Einsatz von genetischen Algorithmen. Dabei ist die Erfindung nicht auf die in diesem Ausführungsbeispiel dargestellten spezifischen Codierungen der Nachrichten für diese genetischen Algorithmen oder spezifische Bewertungsfunktionen sowie spezifische Kreuzungs- oder Mutationsfunktionen beschränkt.

Die einzige Figur zeigt dazu ein System, insbesondere eine Vorrichtung 100, insbesondere einen Computer oder Busteilnehmer. Der Computer 100 kann separat ausgeführt sein, oder aber als Busteilnehmer an einem Bus, insbesondere einen TTCAN-Bus 101 angebunden sein. Der Computer 100 enthält Mittel, die es ermöglichen, wenigstens einzelne Verfahrensschritte des erfindungsgemäßen Verfahrens entsprechend den Ansprüchen ablaufen zu lassen. Insbesondere vorteilhaft ist der Ablauf des Verfahrens in Form eines Computerprogrammes, wodurch im Endeffekt eine optimierte Lösung bezüglich des Bus-Schedules entsteht. So ist hierbei die Einbindung des Verfahrens zur Lösungsfindung in einem Entwicklungstool dargestellt. Dabei kann die Wahl der Bewertungsfunktion, die Wahl der Kreuzungsfunktion sowie die Wahl der Mutationsfunktion individuell vom Systemdesigner oder Anwendungsingenieur als Modul hinzugefügt werden, oder es kann automatisch aus einer systeminherenten Bibliothek dieser Funktionen eine vorgegeben bzw. ausgegeben werden. Damit kann das Entwicklungstool nur die Erstellung des Bus-Schedules umfassen entsprechend dem Verfahren der genetischen Algorithmen, womit gewährleistet ist, dass abhängig von bestimmten Systemvoraussetzungen oder Vorgaben, beispielsweise durch Auftraggeber wie Automobilhersteller, unterschiedliche Metriken, Randbedingungen in Verfahren modular mit dem gleichen Entwicklungswerkzeug eingesetzt werden können.

Das dargestellte Flussdiagramm zeigt im Block 202 den Start des Verfahrens. Im Block 103 erfolgt die Codierung der Busnachrichten, beispielsweise durch Verwendung einer Kennung in binärer Darstellung. Dazu kann vorteilhafter Weise der Identifier des TTCAN-Systems bzw. des CAN entsprechend der Nachrichten verwendet werden. Diese Codierung kann bereits vorgegeben sein und kann nur optional in das Verfahren integriert werden. Ausgehend von dieser Codierung der Busnachrichten werden in Block 104 verschiedene mögliche Lösungsansätze gebildet bzw. dargestellt. Dabei können Nachrichten und/oder Zeitfenster auch öfter als einmal im Busschedule auftauchen. Diese Lösungsansätze des Suchproblems sind also verschiedene Reihenfolgen der Busnachrichten bzw. Zeitfenster für Busnachrichten, wobei bei Darstellung in binärer Form, insbesondere mit Identifiern, verschiedene Bitmuster als Lösungsansätze vorliegen. Diese Bitmuster können einerseits per Zufallsgenerator erzeugt oder auch durch Permutation erzielt werden, wobei durch Permutation alle Möglichkeiten zur Verfügung gestellt werden können. Weitere Kriterien für die Bildung von Lösungsansätzen können bestimmte Vorgabekriterien, wie zeitkritische Nachrichten zuerst und Ähnliches sein oder auch bezüglich des Identifiers auf Prioritäten der Identifier beruhen, usw. Optional kann hierbei bereits, beispielsweise anhand einer Bibliothek, geprüft werden, dass bei der Erstellung möglicher Lösungsansätze bezüglich des Zeitplans der Nachrichtenübermittlung nur gültige Nachrichten in Form der Bitmuster bzw. nur gültige Identifier verwendet werden.

Ungültige Lösungsansätze, insbesondere nicht mögliche Bitmuster (z.B. weil diese Nachrichten und/oder Zeitfenster bzw. die entsprechende Codierung im System nicht existieren) und somit auch ungültige Zeitpläne können dann optional schon im Block 104 ausgeschlossen werden.

Im Block 105 erfolgt dann die Bewertung der Lösungsansätze bzw. der unterschiedlichen Zeitpläne, also der Bus-Schedules, insbesondere in binärer Form durch Aneinanderreihung der Identifier des TTCAN beispielsweise. Zur Bewertung der Lösungsansätze werden beispielsweise alle Latenzzeiten einzelner Lösungsansätze ermittelt und diese entweder miteinander oder mit einem Referenzwert verglichen, um so die minimale Summe aller Latenzzeiten zu ermitteln. Eine andere Bewertung kann beispielsweise über die minimale oder minimalste Summe für Deadlines, also der spätest notwendigen Übermittlungszeitpunkte bzw. Übermittlungszeiten der Nachrichten sein. Dabei sind auch weitere Kriterien zur Bewertung der Lösungsansätze denkbar.

In Block 106 erfolgt sodann die Auswahl der besten Lösungen, also der besten Bus-Schedules entsprechend der Lösungsansätze und der oder des Bewertungskriteriums. Dabei kann z. B. eine vorgebbare Anzahl von Lösungen ausgewählt werden, also beispielsweise die besten 50% oder die besten 5 Stück, oder aber es wird zur Auswahl der besten Lösungen gegen einen Schwellwert bezüglich der Bewertungskriterien bzw. des Bewertungskriteriums verglichen und nur, beispielsweise bei minimalen Summen, bei Unterschreitung dieses Schwellwertes wird die Lösung als auszuwählende mögliche Lösung gewählt.

Im Block 107 sind dann die Kreuzungsfunktionen oder Kreuzungskriterien vorgegeben, und es wird die Kreuzung durchgeführt. Das bedeutet z. B., dass insbesondere zufällig gewählte Lösungen, die aus der Auswahl im Block 106 hervorgegangen sind, an einer vorgebbaren oder per Zufallsgenerator ermittelten Stelle k wenigstens ein Bit austauschen. Wie bereits angedeutet, kann neben der zufälligen Ermittlung dieser Austauschstelle im Bitvektor bzw. im Bitmuster auch eine feste Vorgabe der Kreuzungsposition, beispielsweise jedes erste, jedes zweite, jedes dritte oder andere festgelegte Positionen vorgegeben werden. Dabei können alle Lösungen gekreuzt werden, oder auch nur einige wenige. So kann auch hier die Anzahl der zu kreuzenden Lösungsansätze, also Bus-Schedules, vorgegeben werden. Durch die Kreuzung entsteht im Block 107 somit ein Pool von Lösungen bzw. Lösungsansätzen, wobei jede Lösung einen Bus-Schedule bzw. einen Zeitplan zur Übermittlung der Nachrichten auf den Bus darstellt. Auch hier kann optional vorgesehen sein, entsprechend Block 104 zu prüfen, ob die entstehenden Lösungen im Rahmen der Kreuzung gültige Bitmuster, also gültige Nachrichten bzw. gültige Kennungen, insbesondere Identifier enthalten. So können auch hier ungültige Bus-Schedules als Lösungen aussortiert werden.

In Abfrage 108 wird dann abhängig von bestimmten Kriterien geprüft, ob eine Mutation im Block 109 durchgeführt werden soll oder nicht. Diese Kriterien können einerseits sein, dass eine bestimmte Anzahl von Verfahrensdurchläufen zu einer Mutation führen oder per Zufallsgenerator eine Mutation angestoßen wird. Wird eine Mutation angestoßen, gelangt man zu Block 109. Darin wird nun wenigstens einer der Lösungsansätze, also ein Bus-Schedule, insbesondere als Bitvektor oder Bitmuster kopiert und dieser wenigstens eine, beispielsweise durch Verändern wenigstens eines Bits, insbesondere durch Bitkippen, mutiert, um dann wieder dem Lösungspool hinzugefügt zu werden. Soll keine Mutation durchgeführt werden oder nach der durchgeführten Mutation, gelangt man aus Block 108 oder Block 109 zu Block 110.

Darin wird geprüft, ob ein weiterer Durchlauf durchgeführt werden soll. Dies kann beispielsweise anhand der Anzahl von zur Verfügung stehenden Bus-Schedules erfolgen oder auch anhand bestimmter Abbruchkriterien nach einer vorgebbaren Anzahl von Schleifendurchläufen oder dergleichen. Dieser Block 110 kann optional auch nach Block 106, also nach Auswahl der besten Lösungen nach der Bewertung im Block 105 vorgesehen sein. Ist das Abruchkriterium in Block 110 erfüllt, gelangt man zum Verfahrensende in Block 111 oder aber erneut zu Block 105 zur Bewertung der vorliegenden Lösungsansätze, also der einzelnen Bus-Schedules aus dem Lösungspool.

D. h. zusammenfassend, durch eine geeignete Darstellung der Parameter, also des Parametersets, insbesondere hier der TTCAN-Nachrichten, z. B. als Bitvektor, der eine Lösungsvariante darstellt, können auf einfache Weise viele mögliche Lösungsansätze codiert werden. Diese Darstellungsform ist für den folgenden Durchlauf der elektronischen, nachempfundenen genetischen Evolution optimiert. Es kann aus den Randbedingungen der Applikation auf einfachem Weg eine Bewertungsfunktion erstellt werden, um die aktuelle Lösungspopulation zu bewerten. Beispielsweise kann diese Bewertungsfunktion F nach dem Ansatz "earliest deadline first" oder "shortest latency time" usw. erstellt werden. Die vorliegenden Lösungen (aktuelle Population) würde dann über diese Bewertungsfunktion bewertet und die stärksten oder besten würden für die nächste Iteration herangezogen, z. B. die ersten vier Lösungen mit der kürzesten Deadline, wenn nach "earliest deadline first" bewertet wurde. Aus diesen stärksten oder besten Lösungen könnte man wieder zwei Lösungen herausnehmen und miteinander kreuzen, z. B. an der Stelle k. Es entstehen zwei neue Lösungen, die sich eventuell aufgrund der Herkunft als noch besser erweisen (das zeigt die nächste Bewertung). Es steht dem Algorithmus frei, die aktuelle Population auch noch über Mutation zu bearbeiten. Dabei würde z. B. ein Bit aus einem Lösungsbitvektor gekippt oder verschoben usw. (also mutiert), um eventuell auf einen komplett neuen Lösungsansatz zu stoßen. Dieser aus der Mutation resultierende Lösungsansatz gemeinsam mit den gekreuzten Lösungen und den verbliebenen alten stärksten Lösungen werden wieder der Bewertungsfunktion zugeführt usw.

Der Ansatz des genetischen Algorithmus kann prinzipiell in jedes TTCAN-Planungswerkzeug mit geeigneten Schnittstellen eingebaut werden. Dabei ist natürlich die Zahl zur Codierung der Nachrichten für eine geeignete Kreuzungsfunktion und für eine geeignete Mutationsfunktion zu treffen. Natürlich muss auch eine Bewertungsfunktion nach einer bestimmten Metrik bzw. individuellen Randbedingungen realisiert werden. Diese Festlegung kann entweder fest in das Entwicklungstool eingebaut werden oder aber als Zusätze, die beim Design eines TTCAN-Netzwerks modular hinzugefügt werden, angeboten werden. Prinzipiell müsste bei diesem Ansatz also nur das Verfahren, nach genetischen Algorithmen zu suchen, im TTCAN-Entwicklungswerkzeug implementiert werden.

Damit ergibt sich eine vorteilhafte Möglichkeit zur Erzielung eines optimierten Bus-Schedules im automatisierten Verfahren.

## Patentansprüche

1. Verfahren zur Erstellung eines Zeitplans der Übermittlung von Nachrichten auf einem zeitgesteuerten Bussystem wobei der Zeitplan durch Verwendung eines genetischen Algorithmus erstellt wird, **dadurch gekennzeichnet, dass** die Nachrichten mit einer Kennung versehen sind oder werden und die Nachrichten mit der entsprechenden Kennung in einer vorgebbaren Reihenfolge als Zeitplan dargestellt werden, wobei als Lösungsansätze eines Suchproblems des genetischen Algorithmus verschiedene Reihenfolgen der Kennungen der Nachrichten vorgesehen sind.

2. Verfahren nach Anspruch 1, **dadurch gekennzeichnet, dass** die Nachrichten in periodische und spontane Nachrichten unterteilt werden.

3. Verfahren nach Anspruch 1, **dadurch gekennzeichnet, dass** es sich bei dem Bussystem um ein TTCAN Bussystem handelt und für die Nachrichten Zeitfenster entsprechend der Sendereihenfolge als Zeitplan vorgesehen sind.

4. Verfahren nach Anspruch 1, 2 und 3, **dadurch gekennzeichnet, dass** wenigstens ein bezüglich der Reihenfolge vorgebbares Zeitfenster im Zeitplan zur Übermittlung spontaner Nachrichten eingesetzt wird und die spontanen Nachrichten in dem wenigstens einen Zeitfenster eine Arbitrierung durchführen.

5. Verfahren nach Anspruch 1, **dadurch gekennzeichnet, dass** für die Übermittlung der Nachrichten Zeitfenster vorgesehen sind und wenigstens eine Reihenfolge der Zeitfenster oder der Nachrichten als wenigstens ein möglicher Zeitplan ermittelt wird.

6. Verfahren nach Anspruch 5, **dadurch gekennzeichnet, dass** der wenigstens eine mögliche Zeitplan mit wenigstens einem vorgebbaren ersten Bewertungskriterium bewertet wird.

7. Verfahren nach Anspruch 6, **dadurch gekennzeichnet, dass** als erstes Bewertungskriterium ein Vergleich der Summe der Latenzzeiten des wenigstens einen Zeitplans mit einem vorgegebenen Wert oder der Summe der Latenzzeiten wenigstens eines weiteren Zeitplans verglichen wird.,

8. Verfahren nach Anspruch 6, **dadurch gekennzeichnet, dass** als erstes Bewertungskriterium ein Vergleich der Summe der notwendigen Übermittlungszeitpunkte oder -zeiten der Nachrichten des wenigstens einen Zeitplans mit einem vorgegebenen Wert oder der Summe der notwendigen Übermittlungszeitpunkte oder -zeiten der Nachrichten wenigstens eines weiteren Zeitplans verglichen wird.

9. Verfahren nach Anspruch 5 und 6, **dadurch gekennzeichnet, dass** wenigstens ein möglicher Zeitplan abhängig von dem wenigstens einen ersten Bewertungskriterium ausgewählt wird.

10. Verfahren nach Anspruch 9, **dadurch gekennzeichnet, dass** der wenigstens eine mögliche Zeitplan der ausgewählt wird mit wenigstens einem zweiten möglichen Zeitplan gekreuzt wird.

11. Verfahren nach Anspruch 10, **dadurch gekennzeichnet, dass** die zu kreuzenden Zeitpläne derart verändert werden, dass wenigstens eine Nachricht ausgetauscht wird.

12. Verfahren nach Anspruch 1, **dadurch gekennzeichnet, dass** als Kennung ein Bitmuster, insbesondere entsprechend dem CAN Bus oder TTCAN Bus, verwendet wird.

13. Verfahren nach Anspruch 10 und 12, **dadurch gekennzeichnet, dass** die zu kreuzenden Zeitpläne derart verändert werden, dass wenigstens ein Bit des Bitmusters ausgetauscht wird.

14. Verfahren nach Anspruch 5, **dadurch gekennzeichnet, dass** die wenigstens eine Reihenfolge der Zeitfenster oder Nachrichten als Zeitplan in Form von Bits dargestellt ist und abhängig von wenigstens einem zweiten Kriterium wenigstens ein Bit verändert wird.

15. Verfahren nach Anspruch 14, **dadurch gekennzeichnet, dass** das wenigstens eine Bit gemäß einer Zufallsfunktion verändert wird.

16. Vorrichtung zur Erstellung eines Zeitplans der Übermittlung von Nachrichten auf einem zeitgesteuerten Bussystem wobei Mittel vorgesehen sind, welche den Zeitplan unter Verwendung eines genetischen Algorithmus erstellen, **dadurch gekennzeichnet, dass** die Nachrichten mit einer Kennung versehen sind und dass weitere Mittel vorgesehen sind, die derart ausgestaltet sind, dass die Nachrichten mit einer Kennung versehen werden, wenn diese noch nicht mit einer Kennung versehen sind und die weiteren Mittel die Nachrichten mit entsprechender Kennung in einer vorgebbaren Reihenfolge als Zeitplan darstellen und als Lösungsansätze eines Suchproblems des genetischen Algorithmus verschiedene Reihenfolgen der Kennungen der Nachrichten vorsehen.

17. Computerprogramm, welches bei Ausführung auf einem Computer oder auf einer Vorrichtung gemäß Anspruch 16 alle Verfahrensschritte wenigstens eines Verfahrens nach wenigstens einem der Ansprüche 1 bis 15 ausführt.

18. Computerprogrammprodukt, welches bei Eingabe in einen Computer oder eine Vorrichtung nach Anspruch 16 alle Verfahrensschritte wenigstens eines Verfahrens nach wenigstens einem der Ansprüche 1 bis 15 ausführt.

## Claims

1. Method for producing a time schedule for the transmission of messages on a timed bus system, with the time schedule being produced by using a genetic algorithm, **characterized in that** the messages are provided with an identifier and the messages are represented, with the corresponding identifier, in a predefinable sequence as a time schedule, with various sequences of the identifiers of the messages being provided as approaches to a solution for a search problem of the genetic algorithm.

2. Method according to Claim 1, **characterized in that** the messages are divided into periodic and spontaneous messages.

3. Method according to Claim 1, **characterized in that** the bus system is a TTCAN bus system and time windows corresponding to the transmission sequence are provided as a time schedule for the messages.

4. Method according to Claims 1, 2 and 3, **characterized in that** at least one time window which is predefinable with respect to the sequence is used in the time schedule in order to transmit spontaneous messages and the spontaneous messages to carry out arbitration in the at least one time window.

5. Method according to Claim 1, **characterized in that** time windows are provided for the transmission of the messages, and at least one sequence of the time windows or of the messages is determined as at least one possible time schedule.

6. Method according to Claim 5, **characterized in that** the at least one possible time schedule is evaluated with at least one predefinable first evaluation criterion.

7. Method according to Claim 6, **characterized in that**, as a first evaluation criterion, the sum of the latency times of the at least one time schedule is compared with a predefined value or the sum of the latency times of at least one further time schedule.

8. Method according to Claim 6, **characterized in that**, as a first evaluation criterion, the sum of the necessary transmission times of the messages of the at least one time schedule is compared with a predefined value or the sum of the necessary transmission times of the messages of at least one further time schedule.

9. Method according to Claim 5 and 6, **characterized in that** at least one possible time schedule is selected as a function of the at least one first evaluation criterion.

10. Method according to Claim 9, **characterized in that** the at least one possible time schedule which is selected is crossed with at least one second possible time schedule.

11. Method according to Claim 10, **characterized in that** the time schedules to be crossed are changed in such a way that at least one message is exchanged.

12. Method according to Claim 1, **characterized in that** a bit pattern, in particular corresponding to the CAN bus or TTCAN bus, is used as an identifier.

13. Method according to Claims 10 and 12, **characterized in that** the time schedules to be crossed are changed in such a way that at least one bit of the bit pattern is exchanged.

14. Method according to Claim 5, **characterized in that** the at least one sequence of the time windows or messages is represented as a time schedule in the form of bits and at least one bit is changed as a function of at least one second criterion.

15. Method according to Claim 14, **characterized in that** the at least one bit is changed in accordance with a random function.

16. Device for producing a time schedule for the transmission of messages on a timed bus system, means which produce the time schedule using a genetic algorithm being provided, **characterized in that** the messages are provided with an identifier, and that further means are provided which are configured in such a way that the messages are provided with an identifier if they have not yet been provided with an identifier, and the further means represent the messages with a corresponding identifier in a predefined sequence as a time schedule and various sequences of the identifiers of the message are provided as approaches to a solution for a search problem of the genetic algorithm.

17. Computer program which when executed on a computer or on a device according to Claim 16 executes all the method steps of at least one method according to at least one of the Claims 1 to 15.

18. Computer program product which when input into a computer or a device according to Claim 16 executes all the method steps of at least one method according to at least one of Claims 1 to 15.

## Revendications

1. Procédé pour établir un échéancier de la transmission de messages sur un système de bus commandé dans le temps, l'échéancier étant établi par utilisation d'un algorithme génétique,
**caractérisé en ce que**
les messages sont munis d'un code, ou on les munit d'un code, et les messages munis du code correspondant sont présentés dans un ordre de succession pouvant être prédéterminé sous la forme d'un échéancier, et différents ordres de succession des codes des messages sont prévus en tant que mises en équation d'un problème de recherche de l'algorithme génétique.

2. Procédé selon la revendication 1,
**caractérisé en ce que**
les messages sont classés en messages périodiques et en messages spontanés.

3. Procédé selon la revendication 1,
**caractérisé en ce que**
le système de bus est un système de bus TTCAN, et comme échéancier pour les messages des fenêtres de temps correspondent à l'ordre de succession des émetteurs.

4. Procédé selon la revendication 1, 2 ou 3,
**caractérisé en ce qu'**
au moins une fenêtre de temps pouvant être prédéterminée relativement à l'ordre de succession est établie dans l'échéancier pour la transmission de messages spontanés et les messages spontanés exécutent un arbitrage dans au moins une fenêtre de temps.

5. Procédé selon la revendication 1,
**caractérisé en ce que**
des fenêtres de temps sont prévues pour la transmission des messages et on obtient au moins un ordre de succession des fenêtres de temps ou des messages en tant qu'au moins un échéancier possible.

6. Procédé selon la revendication 5,
**caractérisé en ce que**
l'au moins un échéancier possible est exploité avec au moins un premier critère d'évaluation pouvant être prédéterminé.

7. Procédé selon la revendication 6,
**caractérisé en ce que**
comme premier critère d'évaluation, on compare une comparaison de la somme des temps de latence de l'au moins un échéancier, avec une valeur prédéterminée ou avec la somme des temps de latence d'au moins un autre échéancier.

8. Procédé selon la revendication 6,
**caractérisé en ce que**
comme premier critère d'évaluation, on compare une comparaison de la somme des instants ou des temps de transmission nécessaires des messages de l'au moins un échéancier, avec une valeur prédéterminée ou avec la somme des instants ou temps de transmission nécessaires des messages d'au moins un autre échéancier.

9. Procédé selon la revendication 5 ou 6,
**caractérisé en ce qu'**
on sélectionne au moins un échéancier possible en fonction de l'au moins un premier critère d'évaluation.

10. Procédé selon la revendication 9,
**caractérisé en ce qu'**
on croise l'au moins un échéancier possible sélectionné, avec au moins un deuxième échéancier possible.

11. Procédé selon la revendication 10,
**caractérisé en ce qu'**
on modifie les échéanciers à croiser de telle manière qu'au moins un message soit échangé.

12. Procédé selon la revendication 1,
**caractérisé en ce qu'**
on utilise comme code un motif de bits, en particulier en correspondance avec le bus CAN ou le bus TTCAN.

13. Procédé selon les revendications 10 et 12,
**caractérisé en ce qu'**
on modifie les échéanciers à croiser de manière qu'au moins un bit du motif de bits soit échangé.

14. Procédé selon la revendication 5,
**caractérisé en ce qu'**
au moins un ordre de succession des fenêtres de temps ou des messages est présenté comme échéancier sous la forme de bits et on modifie au moins un bits en fonction d'au moins un deuxième critère.

15. Procédé selon la revendication 14,
**caractérisé en ce qu'**
on modifie l'au moins un bit selon une fonction aléatoire.

16. Dispositif pour l'établissement d'un échéancier de la transmission de messages sur un bus commandé par le temps, avec des moyens qui établissent l'échéancier en utilisant un algorithme génétique,
**caractérisé en ce que**
les messages sont munis d'un code et d'autres moyens sont constitués de manière que les messages soient munis d'un code lorsque ces derniers ne sont pas encore munis d'un code, et les autres moyens présentent les messages munis d'un code correspondant dans un ordre de succession prédéterminé pour constituer un échéancier et, comme mises en équation d'un problème de recherche de l'algorithme génétique, on prévoit différents ordres de succession des codes des messages.

17. Programme d'ordinateur qui, lorsqu'il est exécuté sur un ordinateur ou sur un dispositif selon la revendication 16, exécute toutes les phases d'un procédé selon au moins l'une des revendications 1 à 15.

18. Produit constitué par un programme d'ordinateur qui, lorsqu'il est chargé dans un ordinateur ou dans un dispositif selon la revendication 16, exécute toutes les phases d'au moins un procédé selon une des revendications 1 à 15.
